# EUROPÄISCHE PATENTSCHRIFT

(11) **EP 1 452 764 B1**
(45) Veröffentlichungstag und Bekanntmachung des Hinweises auf die Patenterteilung: **17.05.2006**
(21) Anmeldenummer: 04003910.9
(22) Anmeldetag: 20.02.2004
(51) Int. Cl.: F16D 59/02, F16D 65/14

(54) **Elektromagnetisch lüftbare Federdruckbremse**
Spring actuated brake with electromagnetic release
Frein à ressort avec dégagement électro-magnétique

(30) Priorität: 25.02.2003 DE 20303060 U
(43) Veröffentlichungstag der Anmeldung: 01.09.2004
(73) Patentinhaber: Bubenzer Bremsen Gerhard Bubenzer Ing. GmbH, 57548 Kirchen-Wehbach (DE)
(72) Erfinder: Müller-Späth, Thomas, 57258 Freudenberg (DE)
(74) Vertreter: von Samson-Himmelstjerna, Friedrich

(56) Entgegenhaltungen:
- DE-A- 4 109 740
- DE-B- 1 625 671
- DE-U- 8 519 223
- DE-U- 29 510 168
- GB-A- 316 770
- GB-A- 1 147 413

## Beschreibung

Die Erfindung betrifft eine elektromagnetische Federdruckbremse nach dem Oberbegriff des Anspruchs 1.

Solche Bremsen sind Sicherheitsbremsen, die beim Abschalten des Stromes mechanisch bremsen. Dadurch entfalten solche Bremsen auch bei Stromausfall ihre Bremswirkung. Sie werden beispielsweise zur Bremsung von Elektromotoren oder von Getrieben eingesetzt und wirken direkt auf ein zu bremsende Welle.

Aus EP-A-0953786 ist eine elektromagnetische Federdruckbremse bekannt bei der die Bremsfederkraft, und dadurch das Bremsmoment, zentral über einen Einstellring verstellbar ist. Dieser Einstellring wirkt über Stützbolzen direkt auf alle als Schraubendruckfedern ausgebildete Bremsfedern.

Toleranzen bei der Herstellung der Bremsfedern sowie Reibungseffekte können dazu führen, dass die Bremsfedern mit unterschiedlichen Kräften auf die Ankerscheibe wirken und damit eine über den Umfang der Bremsscheibe ungleichmäßig wirkende Bremskraft aufbringen. Dies führt zu einer ungleichmäßigen Abnutzung der stillstehenden Bremsflächen.

Aus der DE-U-85 19 223 ist eine Bremse bekannt, bei der für jede Bremsfeder eine Einstellanordnung vorgesehen ist, über die jede einzelne Feder so vorgespannt werden kann, dass alle Federn jeweils mit der gewünschten Kraft ihre Bremswirkung entfalten. Dadurch wird beim Schließen der Bremse die Bremsscheibenanordnung über den Umfang gleichmäßig belastet.

Ausgehend von der Bremse gemäß DE-U-85 19 223 besteht jedoch das Problem, daß auch bei gelöster (gelüfteter) Bremse die Bremsbeläge an den Bremsflächen entlang schleifen können. Dies kann zu unerwünschtem Verschleiß und Temperaturbelastung an den Bremsbelägen bzw. an den Bremsflächen führen.

Es besteht also die Aufgabe, eine Federdruckbremse bereitzustellen, bei welcher das Verschleißverhalten bei gelöster (gelüfteter) Bremse verbessert wird.

Diese Aufgabe wird von einer Bremse gemäß Anspruch 1 gelöst. Die hier vorgesehenen Federeinheiten lösen die Bremsscheibenanordnung bei gelöster (gelüfteter) Bremse vollständig von der Ankerring- und der Bremsflanschanordnung. Die Bremsscheibenanordnung wird also im gelüfteten Zustand vollständig freigestellt, so daß sie sich berührungsfrei von der Antriebswelle angetrieben, zwischen Ankerring- und Bremsflanschanordnung drehen kann.

Die Ausgestaltungen nach den Ansprüchen 2, 3 und 4 betreffen besonders vorteilhafte Einstellanordnungen, bei denen die Vorspannung zum einen genau (Anspruch 2 und 3) zum anderen ohne Demontage der Hauptkomponenten (Anspruch 4) und individuell für jede einzelne Feder einstellbar ist.

Die Ansprüche 5 und 6 betreffen die Spaltbreiten, die eingestellt werden müssen, damit die Bremsscheibe frei liegt. Und die Ansprüche 7 bis 10 Ausführungsformen bei denen die Spaltbreiten ohne Demontage an außen zugänglichen Einstellmitteln fixierbar vorgenommen werden kann. Die Spaltbreiten müssen beispielsweise bei Abnutzung der Bremsflächen nachgestellt werden.

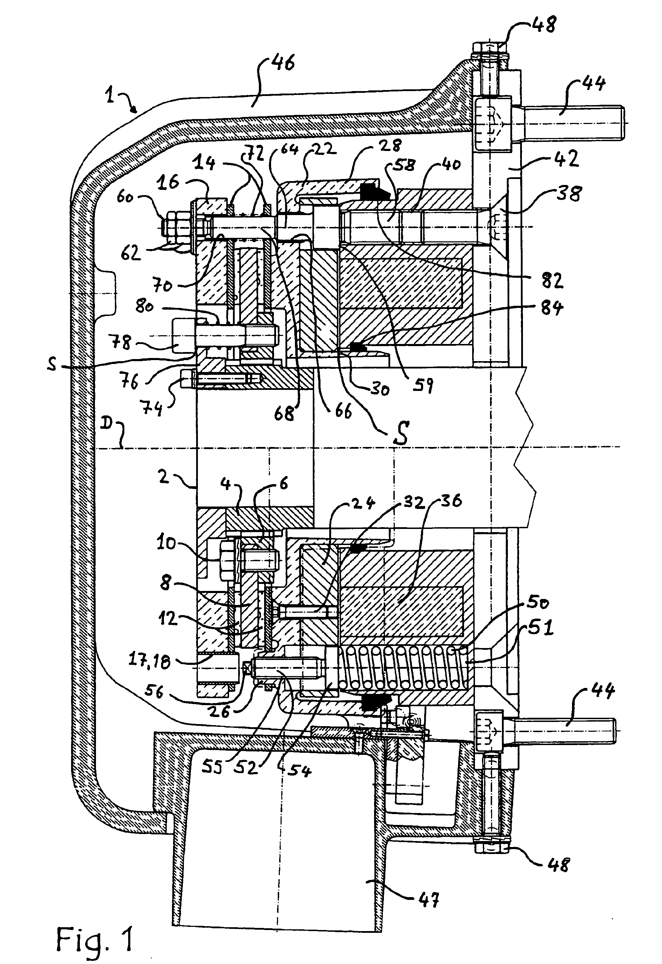

Weitere Vorteile und Merkmale der Erfindung ergeben sich aus den Ansprüchen sowie aus der nachfolgenden Beschreibung eines bevorzugten Ausführungsbeispiels der Erfindung anhand der Zeichnungen, in denen
- Figur 1: einen Schnitt einer Ausführungsform einer erfindungsgemäßen elektromagnetischen Federdruckbremse zeigt, wobei der Schnittverlauf so gewählt ist, dass alle wesentlichen Hauptkompenenten erkennbar sind.
- Figur 2: eine alternative Bremsscheibenausführung zeigt.

Die elektromagnetische Federdruckbremse 1 dient zum Abbremsen eines in die Federdruckbremse hineinragenden Wellenendes 2 mit einer Drehachse D. Auf dem Wellenende sitzt koaxial, drehfest eine Mitnehmernabe 4, die an ihrem Außenmantel mit einer Außenverzahnung (z.B. einer Evolventenverzahnung) versehen ist, auf der über eine entsprechende Innenverzahnung, koaxial und drehfest zur Mitnehmernabe 4, eine Bremsscheibenträgermuffe 6 sitzt, die einen Anschlußflansch aufweist an dem über vier über den Umfang verteilte Gewindebohrungen die Bremsscheibe 8 über Verschraubungen 10 zentriert befestigt ist.

Die Verzahnung zwischen Mitnehmernabe 4 und der Bremsscheibenträgermuffe 6 ist so gewählt, dass beide relativ zueinander axial beweglich sind. Auf diese Weise ist ein axialer Ausgleich bei unterschiedlich langen Wellenenden möglich. Die Mitnehmernabe 4 ist in üblicher Weise über eine geeignete Wellen-Nabenverbindung mit dem Wellenende fest verbunden, beispielsweise über einen Preßsitz oder über eine Paßfederverbindung. Die Verbindung muß in der Lage sein, das gesamte über die Bremsscheibe 8 auf die Mitnehmernabe 4 ausgeübte Bremsmoment auf das Wellenende 2 zu übertragen.

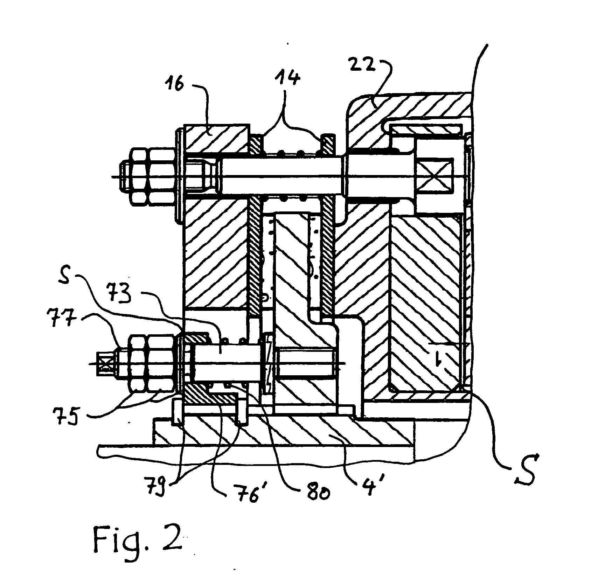

Es ist auch möglich, dass die Bremsscheibe 8 selbst mit einer entsprechenden Innenverzahnung versehen ist und direkt auf der Mitnehmernabe 4 axial verschieblich angebracht wird (Fig. 2). Die Bremsscheibe 8 selbst ist auf beiden Seiten mit Bremsbelägen 12 versehen. Diese sind üblicherweise als metallische Sinterbeläge ausgebildet, während die Bremsscheibe 8 selbst aus geeigneten metallischen oder nicht-metallischen Werkstoffen bestehen kann (z.B. Stahl, Leichtmetall, Verbundwerkstoffe, Aluminium). Die Bremsscheibe wird in der einen axialen Richtung zum Wellenende hin von einer Bremsflanschanordnung 14, 16 flankiert, die aus einer Reibplatte 14 und einem Flanschring 16 gebildet wird. Die Reibplatte 14, die beispielsweise aus rostfreiem Stahl besteht ist über acht über den Umfang des Flanschringes 16 und der Reibplatte 14 verteilte Verbindungshülsen 18 mit dem Flanschring 16 verbunden.

In der entgegengesetzten axialen Richtung (in Richtung Wellenantrieb) ist eine Ankerringanordnung 20, 22, 24 angeordnet, die aus einer weiteren Reibplatte 14, einem Ankerring 22 und einem Magnetdeckel 24 besteht. Die Reibplatte 14 ist über im Ankerring 22 ausgebildete Führungsdome 26 mit diesem verbunden. Die Reibplatten 14 sind über entsprechende Bohrungen auf die Verbindungshülsen 18 bzw. Führungsdome 26 aufgepresst, so dass die Reibplatten 14 betriebsfest aber demontierbar mit dem Flanschring 16 bzw. dem Ankerring 22 verbunden sind. Sowohl die Bremsflanschanordnung 14, 16 als auch die Ankerringanordnung 14, 22, 24 ist koaxial zur Drehachse D angeordnet.

Der Ankerring 22 bildet einen zur Antriebsseite hin offenen Ringraum, der durch zwei konzentrische Seitenflanken 28, 30 gebildet wird. In diesem Ringraum ist der Magnetdeckel 24 über acht Befestigungsschrauben 32 befestigt. Weiterhin ragt in den Ringraum die aus einem Spulenkörper 34 und der Magnetspule 36, ebenfalls ringförmig ausgebildete Elektromagnet, der über vier axial verlaufende Befestigungsschrauben 38, die in eine entsprechende Gewindebohrung 40 eingreifen, mit dem Anschlußflansch 42 der Federdruckbremse 1 verbunden ist. Über diesen Anschlußflansch 42 und entsprechende Befestigungsschrauben 44 ist die Federdruckbremse 1 mit einer nicht dargestellten Antriebseinheit verbunden, aus der das zu bremsende Wellenende 2 herausragt. Ebenfalls mit dem Anschlußflansch 42 ist der Klemmenkasten 47 verbunden über den die elektrischen Zuleitung (nicht dargestellt) zur Magnetspule 36 geführt werden. Die Federdruckbremse ist mit einem Deckel 46 versehen, der über radial in den Anschlußflansch 42 eingebrachte Befestigungsschrauben 48 angebracht ist und abhängig vom Klemmenkasten gelöst werden kann.

Zum Bremsen wird die Bremskraft über Schraubendruckfedern 50 aufgebracht. Diese sind im Spulenkörper 34 vorgesehenen Sacklöchern 51 angeordnet, die, vorzugsweise acht Stück, gleichmäßig über den Umfang des Spulenkörpers 34 verteilt sind. Koaxial zu den Sacklöchern 51 sind die Führungsdome 26 des Ankerrings 22 mit Innengewinden 55 versehen, in die von der Antriebsseite her Verstellelemente 52 eingeschraubt sind, die an ihrem der Feder 50 zugewandten Ende einen Stempel 54 aufweisen, dessen Durchmesser dem der Sacklöcher 51 und entsprechenden Durchgangsbohrungen im Magnetdeckel 24 und Ausnehmungen im Ankerring 22 entspricht. Das Stellelement 52 weist ein dem Innengewinde 55 des Führungsdoms 26 entsprechendes Außengewinde auf, über das es mittels eines Schraubkopfes 56 in axialer Richtung verstellt werden kann. Das Gewinde ist selbsthemmend, vorzugsweise als selbsthemmendes Feingewinde ausgeführt, so dass im Betrieb keine ungewollte Verstellung der Federkräfte stattfindet.

Beim Bremsen üben die Schraubendruckfedern 50, sich über den Ankerring 22 am Anschlußflansch 42 abstützend, eine Druckkraft auf den Stempel 54 aus, der diese über das Gewinde auf den Ankerring 22 und damit auf die Reibplatte 14 überträgt. Die Ankerringanordnung 20, 22, 24 bewegt sich dabei axial in Richtung Wellenende 2 und klemmt die Bremsscheibe 8 mit den Bremsbelägen 12 gegen die Bremsflanschanordnung 14, 16. Die Bremsflanschanordnung 14, 16 ist über vier Bolzen 58 mit dem Spulenkörper 34 gekoppelt.

Die Bolzen 58 sind an einem Ende mit einem Außengewinde versehen, mit dem sie in die entsprechenden Gewindebohrungen 40 eingeschraubt werden. Im eingeschraubten Zustand stützen sie sich mit einer Schulter 59 am Rand der Gewindebohrung ab und können so mit definierter Vorspannung fixiert werden. Am gegenüberliegende Ende weisen die Bolzen ebenfalls einen Gewindebereich 60 auf, der über die Bremsflanschanordnung hinausragt und eine konterbare Mutternanordnung 62 trägt gegen den sich die Bremsflanschanordnung 14, 16 bei aufgebrachter Bremskraft abstützt.

Durch das Einklemmen der Bremsscheibenanordnung 8, 12 wird eine Reibwirkung erzielt, die zum gewünschten Bremsmoment führt, das auf das Wellenende 2 und den entsprechenden zu bremsenden Antrieb übertragen wird.

Zum Lösen der Bremse wird die Magnetspule elektrisch erregt und das den Spulenkörper 34 und den Magnetdeckel 24 durchsetzende Magnetfeld bewegt die Ankerringanordnung in axialer Richtung von der Bremsscheibe weg und schließt den Spalt S, so dass der Magnetdeckel auf dem Spulenkörper aufsitzt. Der Ankerring wird dabei axial von einem ersten Führungsabschnitt 64 und entsprechende mit Gleithülsen 66 versehenen Führungsbohrungen im Ankerring 22 axial geführt. Ein zweiter Führungsabschnitt 68 des Bolzens 58 durchsetzt entsprechende Bohrungen in den Reibplatten 14 sowie eine ebenfalls mit einer Gleithülse 70 versehene Bohrung 72 im Bremsflansch 16.

Koaxial zum Führungsabschnitt 68 trägt der Bolzen 58 eine Schraubendruckfeder 72, die zwischen den beiden Reibplatten 14 angeordnet ist. Die Druckfeder 62 führt dazu, dass beim Lösen oder Lüften der Bremse bei elektrischer Erregung der Magnetspulenanordnung die Reibplatten auseinander gedrückt werden und damit die Bremsflanschanordnung 14, 16 weiterhin an den Konterschrauben 62 anliegt, während sich die Ankerringanordnung 14, 22, 24 um den Betrag S in Richtung Spulenkörper bewegt. Dabei entsteht zwischen dem antriebsseitigen Sinterbelag 12 der Bremsscheibe 8 und der antriebsseitigen Reibplatte 14 ebenfalls ein Spalt mit der Breite S.

Damit sich die Bremsscheibe 8 und der zum Wellenende hin weisende Bremsbelag 12 von der anderen zur Bremsflanschanordnung 14, 16 gehörenden Reibplatte 14 löst ist an der Mitnehmernabe 4 über vier Schrauben 74 ein Anschlagflansch 76 angebracht. Der Anschlagflansch 76 weist vier über den Umfang verteilte Durchgangsbohrungen auf, die jeweils von einer Schraube 78 durchsetzt sind, die an ihrem Ende ein Gewinde aufweist, mit dem sie in die Bremsscheibenträgermuffe 6 bzw. die Bremsscheibe 8 selbst eingeschraubt ist. Koaxial zum Schraubenschaft ist eine weitere Druckfeder 78 angeordnet, die zwischen dem Anschlagflansch 76 und der Bremsscheibe 8 wirkt. In gebremsten Zustand wird diese Verstellschraube 78 mit ihrem Gewinde in ein entsprechendes Gewinde in der Bremsscheibenträgermuffe 6 bzw. in der Bremsscheibe 8 selbst eingeschraubt bis der Schraubenkopf auf dem Anschlagflansch 76 aufsitzt. Anschließend wird die Schraube wieder so weit gelöst, dass zwischen Schraubenkopf und Anschlagflansch ein Spalt s entsteht, der kleiner ist als der Spalt S zwischen dem Magnetdeckel 24 und dem Spulenkörper 34.

Beim Lüften oder Lösen der Bremse entsteht nun durch die Wirkung der Druckfedern 72 der Spalt S zwischen der flanschringseitigen Reibplatte 14 und dem entsprechenden Bremsbelag 12. Die Federn 80 verschieben die Bremsscheibe 8 auf der Mitnehmernabe 4 axial in Richtung Ankerringanordnung und zwar um den Betrag s, der dem zwischen dem Kopf der Verstellschrauben 78 und dem Flanschring 16 eingestellten Spalt entspricht. Dabei löst sich der dem Bremsflansch zugeordnete Bremsbelag 12 von der entsprechenden Reibplatte 14 um genau diesen Betrag s. Bei einem Betrag s < S befindet sich die Bremsscheibe frei zwischen den Bremsplatten. D.h. im gelüfteten Zustand entsteht kein Verschleiß an den Bremsbelägen 12 oder den Reibplatten 14.

Bei der vorgestellten Bremse kann also der Luftspalt S in einfacher Weise durch entsprechendes Verdrehen der Konterschraubenanordnung 62 auf dem Gewindeende 60 des Bolzens 58 eingestellt werden und der Spalt s kann durch Verdrehen der Verstellschraube 78 gegenüber der Bremsscheibe 8 bzw. der Bremsscheibenträgermuffe 6 eingestellt werden.

Figur 2 zeigt, dass anstatt der dargestellten Verstellschraube 78 ebenso ein die Feder 80 tragender Bolzen 73 eingesetzt werden kann, der mit einem Gewindeende 77 über den Anschlagflansch 76 hinausragt und mit seinem anderen Ende axial definiert mit der Bremsscheibe verbunden ist. Der Spalt s kann dann analog wie beim Bolzen 58 über eine entsprechende konterbare Mutternanordnung 75 eingestellt werden. Alternativ kann der Anschlagflansch 76' ebenfalls über eine Innenverzahnung mit einer axial verlängerten Mitnehmernabe 4' verbunden sein. Die axiale Fixierung erfolgt dann über entsprechende Sicherungsringe 79, die in geeignete Ausnehmungen auf der Mitnehmernabe 4' eingesetzt werden.

Die Einstellung der Federkraft der eigentlichen Bremsfedern 50 erfolgt durch Verdrehen der Stellelemente 52 an ihrem Schraubenkopf 56. Dieser ist mit einem entsprechenden Werkzeug durch die koaxial angeordneten Verbindungshülsen 18 zugänglich. Die Schraubenkraft kann beispielsweise durch Bestimmung des Anzugsdrehmoments beim Verstellen des Stellelements 52 bestimmt werden. Auf diese Weise können alle Bremsfedern 50 so eingestellt werden, dass sie gleiche Kraft auf die Ankerringanordnung ausüben. Dies gewährleistet ein gleichmäßiger Einfallen der Bremse (einen über den gesamten Umfang gleichmäßigen Aufbau der Bremskraft).

Zur Abdichtung der Magnetspule gegen Umwelteinflüsse, z.B. Seewasser oder Staub, ist der zwischen den Seitenflanken 28, 30 des Ankerrings 22 befindliche Ringraum über geeignete Gleitringdichtungen 82, 84 abgedichtet.

Die Bremsbeläge 12 müssen auch nicht zwangsläufig mit der Bremsscheibe 8 verbunden sein. Sie können ebenso mit den Reibplatten 14 verbunden sein, wodurch die abzubremsende Trägheitsmomente auf der Welle reduziert werden können. Die Reibplatten 14 sind vornehmlich aus rostfreiem Stahl hergestellt, wobei der Ankerring und der Flanschring aus Aluminium gefertigt sind. Dadurch wird eine besonders gute Wärmeabfuhr beim Bremsvorgang ermöglicht. Reibplatten 14 und Ankerring 22 bzw. Flanschring 16 können jedoch auch einstückig und/oder aus einem anderen geeigneten Werkstoff bzw. anderen Werkstoffkombinationen hergestellt werden.

## Patentansprüche

1. Elektromagnetische Federdruckbremse (1) mit
einer um eine Drehachse D drehbaren Bremsscheibenanordnung (4, 6, 8, 10, 12), die koaxial zwischen einer Bremsflanschanordnung (14, 16) und einer Ankerringanordnung (14, 22, 24) verläuft, die zur Erzeugung einer Bremswirkung mit der Bremsscheibenanordnung (14, 16, 18) in einer axialen Richtung über Bremsfedern (50) und zum Aufheben der Bremswirkung in entgegengesetzter Axialrichtung durch eine elektromagnetische Spulenanordnung (36, 34) beaufschlagbar sind, wobei die Vorspannung einer Bremsfeder (50) über eine entsprechende Einstellanordnung (52, 55) veränderbar ist, **dadurch gekennzeichnet, daß**
zwischen Bremsflanschanordnung (14, 16, 18) und Bremsscheibenanordnung (4, 6, 8, 10, 12) sowie zwischen Bremsflanschanordnung (14, 16) und Ankerringanordnung (14, 22, 24) Federeinheiten (80; 72) vorgesehen sind, die bei durch die elektromagnetische Spulenanordnung (36, 34) beaufschlagter Ankerringnanordnung (14, 22, 24) die Bremsscheibenanordnung vollständig von der Ankerring- und der Bremsflanschanordnung lösen.

2. Bremse nach Anspruch 1, bei welcher die Einstellanordnung ein über ein entsprechendes Gewinde (55) in der Ankerringanordnung (14, 22, 24, 26) sitzendes, in Kraftrichtung der Bremsfeder (50) wirkendes Stellelement (52) umfaßt.

3. Bremse nach Anspruch 2, bei welcher das Gewinde (55) selbsthemmend, insbesondere als Feingewinde ausgebildet ist.

4. Bremse nach einem der Ansprüche 1 bis 3, bei welcher in der Bremsflanschanordnung (14, 16, 18) eine Öffnung (17, 18) vorgesehen ist, durch die hindurch jedes entsprechende Stellelement (52) einstellbar ist.

5. Bremse nach einem der Ansprüche 1-4, bei welcher eine erste Federanordnung (72) so mit einer ersten Einstelleinrichtung 58, 60, 62) zusammenwirkt, dass Ankerring- und Bremsflanschanordnung bei Beaufschlagung durch die elektromagnetische Spulenanordnung (36, 34) um einen einstellbaren Betrag (S) auseinander bewegt werden.

6. Bremse nach Anspruch 5, bei welcher eine zweite Federanordnung (80) so mit einer zweiten Einstelleinrichtung (74, 76, 78) zusammenwirkt, dass die Bremsscheiben- und die Bremsflanschanordnung bei Beaufschlagung durch die elektromagnetische Spulenanordnung (36, 34) um einen verstellbaren Betrag (s) auseinander bewegt werden, bei welcher die Beziehung gilt: s < S.

7. Bremse nach Anspruch 5 oder 6, bei welcher zum Einstellen des Verstellwegs S eine Mutternanordnung (62) vorgesehen ist, die an einem Gewindeende (60) eines die Bremsflansch- und die Ankerringanordnung in axialer Richtung durchsetzenden und an der elektromagnetischen Spuleneinheit ansetzenden Bolzen (58) aufgeschraubt ist und auf die Bremsflanschanordnung (14, 16) wirkt.

8. Bremse nach Anspruch 6 oder 7, bei welcher zum Einstellen des Verstellwegs (s) eine Stellschraube (78) vorgesehen ist, die auf einen mit der Bremsscheibenanordnung (4, 6, 8, 10, 12) drehbaren Anschlag (76) wirkt, diesen axial durchsetzt und in die Bremsscheibenanordnung (4, 6, 8, 10, 12) eingeschraubt ist.

9. Bremse nach Anspruch 6 oder 7, bei welcher zum Einstellen des Verstellwegs s eine Mutternanordnung (75) vorgesehen ist, die an einem Gewindeende (77) eines den Anschlag (76, 76') in axialer Richtung durchsetzenden und an der Bremsscheibenanordnung ansetzenden Bolzens (73) aufgeschraubt ist und auf den Anschlag (76, 76') wirkt.

10. Bremse nach einem der Ansprüche 8 oder 9, bei welcher die Federeinheiten Schraubendruckfedern (72, 80) umfassen, die jeweils koaxial zu den Stellschrauben (78) bzw. den Bolzen (58) angeordnet sind.

## Claims

1. A spring-actuated brake with electromagnetic release (1) comprising a brake disk assembly (4, 6, 8, 10, 12) rotatable around an axis of rotation D, which runs coaxially between a brake flange assembly (14, 16) and an armature ring assembly (14, 22, 24), which to produce a braking action with the brake disk assembly (14, 16, 18) in an axial direction via brake springs (50) and to cancel the braking action in the opposite axial direction can be acted upon by an electromagnetic coil assembly (24, 26), whereby the bias of a brake spring (50) can be altered via a corresponding adjustment assembly (52, 55),
**characterised in that** spring units (80; 72) are provided between the brake flange assembly (14, 16, 18) and the brake disk assembly (4, 6, 8, 10, 12) as well as between the brake flange assembly (14, 16) and the armature ring assembly (14, 22, 24), and said spring units release the brake disk assembly completely from the armature ring and brake flange assemblies when the armature ring assembly (14, 22, 24) is acted upon by the electromagnetic coil assembly (36, 28).

2. A brake according to Claim 1, in which the adjustment assembly comprises a control element (52) that is seated in the armature ring assembly (14, 22, 24, 26) via a corresponding thread (55) and acts in the direction of force of the brake spring (50).

3. A brake according to Claim 3, in which the thread (55) is self-locking, in particular is constructed as a fine thread.

4. A brake according to one of Claims 1 to 3, in which an opening (17, 18) is provided in the brake flange assembly (14, 16, 18), by which each corresponding control element (52) can be adjusted.

5. A brake according to one of Claims 1 to 4, in which a first spring assembly (72) interacts with a first setting device (58, 60, 62) so that the armature ring and brake flange assemblies are moved apart by an adjustable amount (S) when acted upon by the electromagnetic coil assembly (36, 34).

6. A brake according to Claim 5, in which a second spring assembly (80) interacts with a second adjustment device (74, 76, 78) so that the brake disk and the brake flange assemblies, when acted upon by the electromagnetic coil assembly (36, 34), are moved apart by an adjustable amount (s) for which the relationship s < S applies.

7. A brake according to Claim 5 or 6, in which a nut assembly (62) is provided to adjust the travel s, which assembly is screwed on one thread end (60) of a bolt (58), passing in an axial direction through the brake flange and the armature ring assemblies and attached to the electromagnetic coil unit, and acts on the brake flange assembly (14, 16).

8. A brake according to Claim 6 or 7, in which an adjusting screw (78) is provided to adjust the travel (s), which screw acts on a stop (76) rotatable with the brake disk assembly (4, 6, 8, 10, 12), passes axially through it and is screwed into the brake disk assembly (4, 6, 8, 10, 12).

9. A brake according to Claim 6 or 7, in which a nut assembly (75) is provided to adjust the travel s, which assembly is screwed on one thread end (77) of a bolt (73), passing in the axial direction through the stop (76, 76') and attached to the brake disk assembly, and acts on the stop (76, 76') .

10. A brake according to one of Claims 8 or 9, in which the spring units comprise helical compression springs (72, 80), which are each disposed coaxially to the adjusting screws (78) and the bolt (58).

## Revendications

1. Frein à ressort électromagnétique (1) avec un disque de frein (4, 6, 8, 10, 12) tournant autour d'un axe de rotation, ledit disque de frein se déplaçant de manière coaxiale entre un flasque de frein (14, 16) et un induit annulaire (14, 22, 24), lesquels peuvent être commandés dans une direction axiale avec le disque de frein (14, 16, 18) par le biais de ressorts de freinage (50), en vue de la production d'un effet de freinage, et dans la direction opposée à la direction axiale, au moyen d'une bobine électromagnétique (36, 34), pour annuler l'effet de frein, la précontrainte d'un ressort de freinage (50) pouvant être modifiée au moyen d'un réglage spécifique 52, 55), **caractérisé en ce que** des unités ressorts (80, 72) sont prévues entre le flasque de frein (14, 16, 18) et le disque de frein (4, 6, 8, 10, 12), d'une part, et entre le flasque de frein (14, 16) et l'induit annulaire (14, 22, 24), d'autre part, les unités ressorts dégageant intégralement le disque de frein de l'induit annulaire et du flasque de frein, lorsque l'induit annulaire (14, 22, 24) est asservi par la bobine électromagnétique (36, 34).

2. Frein selon la revendication 1, où le montage de réglage comprend un élément de réglage (52) agissant dans le sens de la force du ressort de freinage (50) et est installé dans l'induit annulaire (14, 22, 24, 26) par le biais d'un filetage spécifique (55).

3. Frein selon la revendication 2, où le filetage (55) est configuré comme blocage automatique, notamment comme filetage à pas fin.

4. Frein selon l'une quelconque des revendications 1 à 3, où une ouverture (17, 18) est prévue dans le flasque de frein (14, 16, 18), à travers duquel chaque élément de réglage spécifique (52) peut être réglé.

5. Frein selon l'une quelconque des revendications 1 à 4, où un premier ressort (72) agit conjointement avec un premier équipement de réglage (58, 60, 62) de telle sorte que l'induit annulaire et le flasque de frein s'écartent d'une valeur réglable (S), dans le cas d'un asservissement par la bobine électromagnétique (36, 34).

6. Frein selon la revendication 5, où un deuxième ressort (80) agit conjointement avec un deuxième équipement de réglage (74, 76, 78) de telle sorte que le disque de frein et le flasque de frein s'écartent d'une valeur réglable (s), dans le cas d'un asservissement par la bobine électromagnétique (36, 34), la relation étant : s < S.

7. Frein selon la revendication 5 ou 6, où un écrou (62) est prévu pour le réglage de la course de réglage S, ledit écrou étant vissé sur une extrémité de filetage (60) d'un boulon (58) l'écrou passant par le flasque de frein et l'induit annulaire en direction axiale, étant par ailleurs appliqué à la bobine électromagnétique et agissant sur le flasque de frein (14, 16).

8. Frein selon la revendication 6 ou 7, où une vis de réglage (78) est prévue pour le réglage de la course de réglage (s), ladite vis de réglage agissant sur une butée (76) mobile autour d'un axe avec le disque de frein (4, 6, 8, 10, 12), traversant ladite butée axialement et étant vissée dans ledit disque de frein 4, 6, 8, 10, 12.

9. Frein selon la revendication 6 ou 7, où un écrou (75) est prévu pour le réglage de la course de réglage s, ledit écrou étant vissé sur une extrémité de filetage (77) d'un écrou passant par la butée (76, 76') en direction axiale, l'écrou étant par ailleurs appliqué au disque de freinage et agissant sur ladite butée (76, 76').

10. Frein selon l'une quelconque des revendications 8 ou 9, où les unités ressorts comprennent des ressorts cylindriques de compression (72, 80) disposés chacun de manière coaxiale par rapport aux vis de réglage (78) ou aux boulons (58).
